# EUROPEAN PATENT SPECIFICATION

(11) **EP 3 583 361 B1**
(45) Date of publication and mention of the grant of the patent: **09.12.2020**
(21) Application number: 18706300.3
(22) Date of filing: 09.02.2018
(51) Int. Cl.: F24H 4/04

(54) **NEW CONCEPT HEAT PUMP WATER HEATER**
NEUES KONZEPT EINES WÄRMEPUMPENWASSERERHITZERS
NOUVEAU CONCEPT DE CHAUFFE-EAU À POMPE À CHALEUR

(30) Priority: 14.02.2017 IT 201700016294
(43) Date of publication of application: 25.12.2019
(73) Proprietor: Ariston Thermo S.p.A., 60044 Fabriano (Ancona) (IT)
(72) Inventor: CANESTRARI, Paolo, 60044 Fabriano (Ancona) (IT); MORBIDELLI, Matteo, 60013 Corinaldo (Ancona) (IT)
(74) Representative: Premru, Rok
(86) International application number: PCT/IB2018/000101
(87) International publication number: WO 2018/150253

(56) References cited:
- WO-A2-2011/051379
- FR-A1- 3 000 786

## Description

The object of the present invention is a heat pump water heater, equipped with such innovative features as to extend its domestic and commercial field of application.

In particular, the invention falls within the field of the so-called monobloc heat pump water heaters, i.e. comprising both the evaporating group and the condensing unit containing the volume of water to be heated in a single enclosure, without the need of using an external unit for the thermodynamic function (typical of the so-called split alternative type).

More specifically, the present invention concerns the class of wall products, namely that of the monobloc heat pump water heaters intended to be installed on a wall.

The operation of such category of products is now standardized and well-known to the man skilled in the art; hereinafter the essential steps of the thermodynamic cycle are summarized with the sole purpose of making the description of the present invention clearer:
- air (taken from the installation environment or from the outside through a canalization) enters the heat pump assembly (hereafter "pump assembly") surmounting the storage tank of the water heater, aided by a fan;
- from here it passes through an evaporator to transfer its heat to the refrigerating fluid that evaporates, while the air is expelled outside the pump assembly;

- said fluid then passes inside the compressor and undergoes an increase in pressure that causes its temperature to rise;
- the refrigerating fluid, now in a superheated vapour state, passes through the condenser (generally consisting of an exchanger directly immersed in the water or in an exchanger that externally envelopes the underlying tank) in order to transmit the heat to the sanitary water;
- in the process of heat exchange with the volume of water contained in the storage tank, the refrigerating fluid passes from the vapour state to the liquid state, condensing and undergoing a considerable reduction in pressure and temperature, to finally pass through the lamination valve, returning to the starting conditions and restart the cycle.

Therefore, the air-water thermodynamic cycle just summarised, absorbs the heat from the air to transfer it, through changes in state and compression/expansion cycles of the refrigerant fluid, to the water to be heated in the storage tank below the pump assembly, up to bring it to a temperature suitable for hygienic-sanitary uses.

In the category of the heat pump water heaters under examination here, i.e. of the monobloc type with wall installation, one of the major drawbacks lies in the laboriousness of installation and maintenance in case of breakdowns or control of the components of the pump assembly: in fact, given the elevated position of such pump assembly, located above the tank of the appliance, the technician operates uncomfortably and in narrow spaces, often in the immediate vicinity of the ceiling.

The prior document WO 2011/051379 partially solves this problem, describing an embodiment variant wherein the compressor of the pump assembly is spatially located below the tank of the appliance; however, other components intended for the thermodynamic function, specifically the evaporator and the fan, are housed in an air channel that develops vertically on the entire rear face of the appliance, resulting in a significant increase in the overall dimensions of the product.

Patent FR 3000786 describes a solution substantially different from the type of heat pump water heaters herein examined, concerning a product intended to be installed in the wall cavity of a wall. Such document shows a configuration of a water heater equipped with a pair of side-by-side tanks, under which the components suitable for carrying out the thermodynamic function are located. Therefore, the product requires ad hoc works for the installation and for the realization of the hydraulic connections and air channels, which make it not comparable or replaceable to a wall-mount monobloc-type heat pump water heater.

The object of the present invention is to obviate such kind of drawbacks, by providing a wall-mount monobloc heat pump water heater (hereinafter referred to as "wall-hung appliance" for description summary) capable of facilitating the installation and maintenance operations in the destination environment.

A further object, at least of some variants of the invention, is to provide means for improving the efficiency of the wall-hung appliance and its ease of use, while maintaining overall dimensions similar to the standard products of the prior art. Another object, at least of some variants of the invention, is to provide means for the reduction of the noise of the pump assembly.

A further object, at least of some variants of the invention, is to propose a solution for the collection of the condensation fluid resulting from the thermodynamic cycle of the wall-hung appliance.

These and other objects, which shall appear clearly hereinafter, are achieved with a wall-hung heat pump water heater (wall-hung appliance) according to claim 1. Other objects may also be achieved through the additional features of the dependent claims.

Further features of the present invention shall be better highlighted by the following description of a preferred embodiment, in accordance with the patent claims and illustrated, purely by way of a non-limiting example, in the annexed drawing tables, in which:
- Figs. 1 and 2 show the wall-hung appliance of the invention, according to a front and a rear perspective view, respectively;
- Figs. 3.A and 3.B show only the pump assembly of the wall-hung appliance according to the invention, according to a top and a perspective front section view, respectively;
- Fig. 4 shows a variant of the wall-hung appliance according to a further possible embodiment;
- Fig. 5 shows a front perspective view of an accessory of which the wall-hung appliance according to the invention may be provided;
- Figs. 6 and 7 show the accessory of Fig. 6, for the purpose of showing the method for hooking it to the wall-hung appliance and a usage method, respectively;
- Figs. 8.A, 8.B and 8.C schematically show the wall installation positions of three types of appliances, of a standard storage water heater, of the wall-hung appliance with pump assembly according to the invention, of a wall-hung appliance with pump assembly of the prior art, respectively.

The features of a preferred variant of the heat pump water heater are now described using the references in the figures. It is noted that the above figures, although schematic, reproduce the elements of the invention in proportions among their spatial dimensions and orientations which are compatible with a possible embodiment.

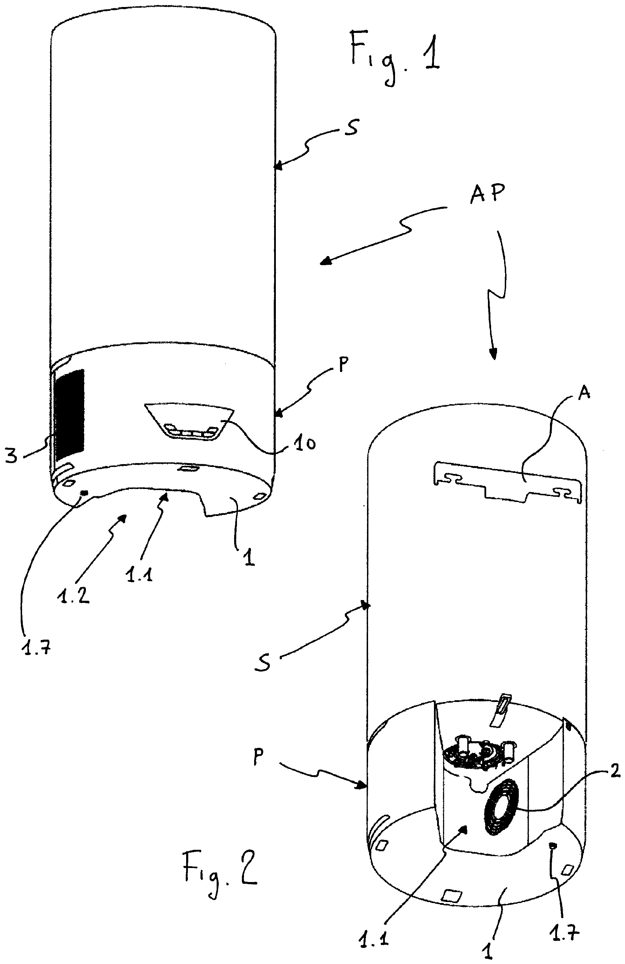

With reference to Fig. 1, AP indicates the wall-hung appliance as a whole, as per prior art consisting of a pump assembly P and a condensing unit S represented by the storage tank of the water heater (hereinafter "tank S", where by such term it is meant the storage tank and the relative outer casing), containing the volume of water to be heated.

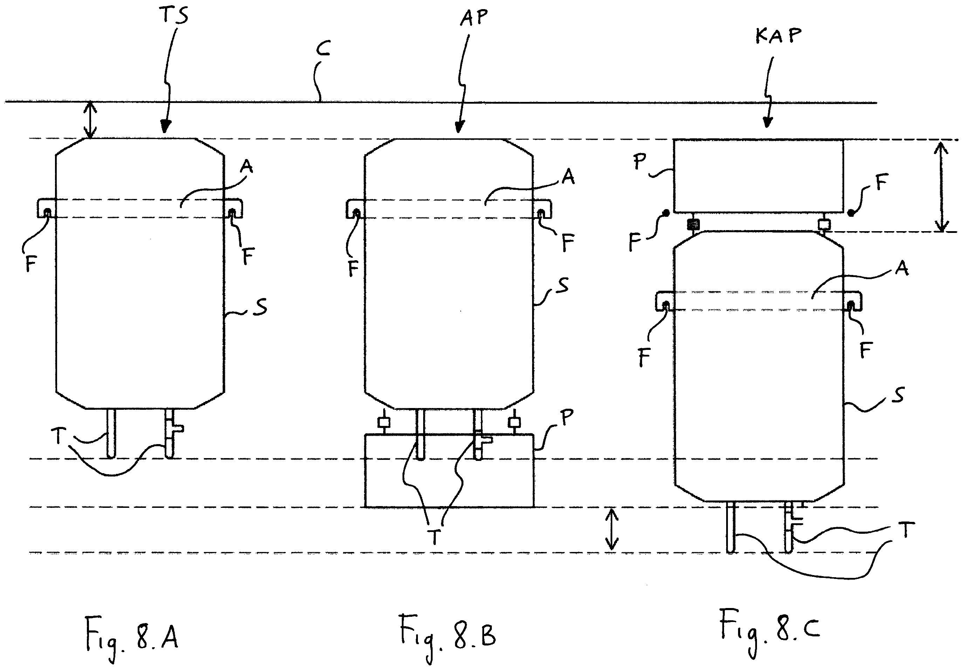

Despite what happens in the wall-hung appliances known so far in the field, the pump assembly P is positioned below the tank S and, according to a preferred variant described herein, it is entirely included within the plan projection of said tank S, as shown in the accompanying figures: a series of advantages in terms of ease of use, installation and maintenance, highlighted by the comparison of the diagrams of Figs. 8.A, 8.B and 8.C derives from such configuration.

Such figures show, from left to right, respectively:
- a standard storage water heater TS (i.e. a water heater equipped with the storage tank S only, without the means suitable for the thermodynamic function),
- the wall-hung appliance AP according to the present invention,
- a wall-hung appliance KAP according to the current prior art,
all installed on the wall at the same distance from the ceiling C.

Reference S indicates the storage tank of which all three wall-hung appliances are provided, all having equal capacity.

It is clear that the wall-hung appliance AP according to the invention may be installed in place of the standard storage water heater TS, taking advantage of both the same holes and/or hooking points F for the fixing of the bracket A to the wall and the pre-existing hydraulic connections T for the connection to the pipes. On the contrary, in the case of the wall-hung appliance KAP known so far, with pump assembly P surmounting the tank S, it is necessary to make new holes F on the wall and move the pipes for the hydraulic connections T further down, with an increase in time and costs for who wants to proceed with the replacement of the water heater TS.

Moreover, with respect to a wall-hung appliance KAP of the prior art, the present invention has smaller vertical overall dimensions and keeps the hydraulic connections T hidden to the sight, thanks to the particular configuration of the pump assembly P.

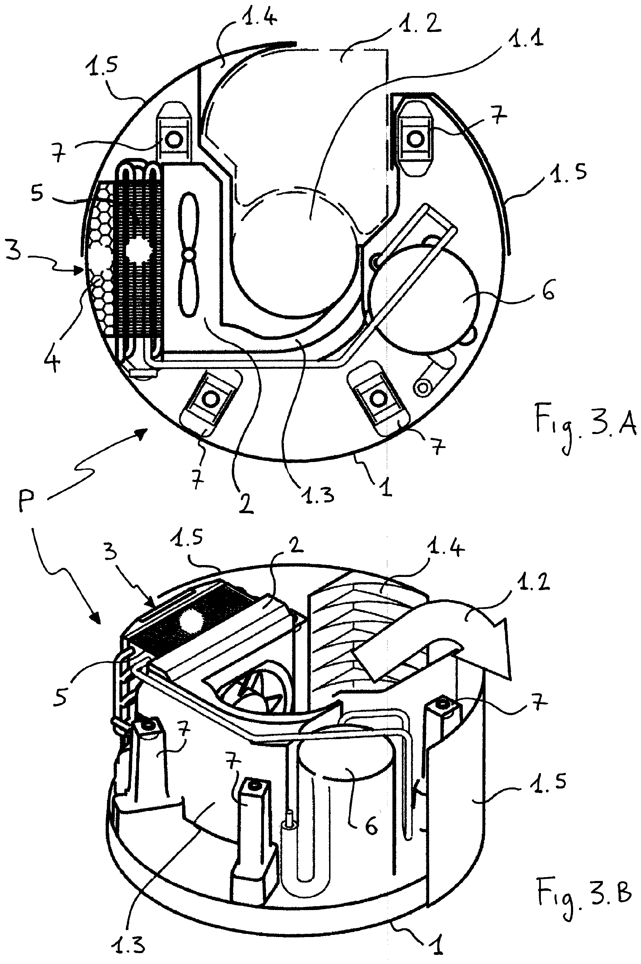

As shown in Fig. 2 and in detail of Figs. 3.A and 3.B, the pump assembly P is in fact provided with a box-shaped body 1 having the shape of a half moon, wherein the thermodynamic components such as the fan 2, the evaporator 5 and the compressor 6 are housed.

The shape of said box-shaped body 1 of the pump assembly P outlines central 1.1 and rear 1.2 free spaces cooperating for the execution of various advantageous functions.

Thanks to said rear free space 1.2, the installation and connection work for the hydraulic connections T is made easier and faster, further facilitated by the possibility of removing the removable panels 1.5, located at the rear ends of the box-shaped body 1: this way the hydraulic connections T remain concealed in said rear free space 1.2 and frontally hidden to the sight by the box-shaped body 1 of the said pump assembly P.

By means of the central free space 1.1, instead, it is possible to carry out the maintenance activities for the overlying tank S, by accessing the flange of the same to check/replace the electrical resistors.

In addition to the advantages just mentioned, such central 1.1 and rear 1.2 free spaces carry out the function of directing the cold air flow exiting from the pump assembly P towards the back of the wall-hung appliance AP, directing it towards the wall (or outside the building, through a special canalization) instead of towards the installation environment.

Figs. 3.A and 3.B help clarify what just described, depicting the box-shaped body 1 of the pump assembly P with a half moon shape, the consequent central 1.1 and rear 1.2 free spaces and the path of the air flow.

The air of the installation environment is drawn inside the pump assembly P by the fan 2, accessing the suction grid 3 and passing through the evaporator 5.

After transferring the refrigerant fluid, the air is expelled outside the box-shaped body 1 of the pump assembly P and, thanks also to a conveyor 1.3, flows into the central free space 1.1, to be then expelled outside the pump assembly P through the rear free space 1.2.

To further assist in directing the outgoing air flow towards the wall, the presence of a baffle 1.4 may be envisaged at the rear of the pump assembly P.

The half moon shape of the pump assembly P, comprising the box-shaped body 1 and the relative central 1.1 and rear 1.2 free spaces, ensures an air flow path without turbulences between suction and delivery; the expulsion through the rear free space 1.2 also prevents cold air from being redirected directly towards the user.

According to a variant of the invention, a muffler 4 may be interposed between the suction grid 3 and the evaporator 5, consisting of sound-absorbing and air-permeable material or channels, so as to reduce the noise of the fan 2 (though already not high, due to the relatively low flow rate of the component) without causing significant load losses.

Figs. 3.A and 3.B show the other components of the pump assembly P, housed in its box-shaped body 1, represented by the compressor 6 and by the anti-vibration devices 7 for the connection with the overlying tank S: together with the aforementioned fan 2 and evaporator 5, therefore, said box-shaped body 1 comprises the main components adapted to the thermodynamic function of the pump assembly P.

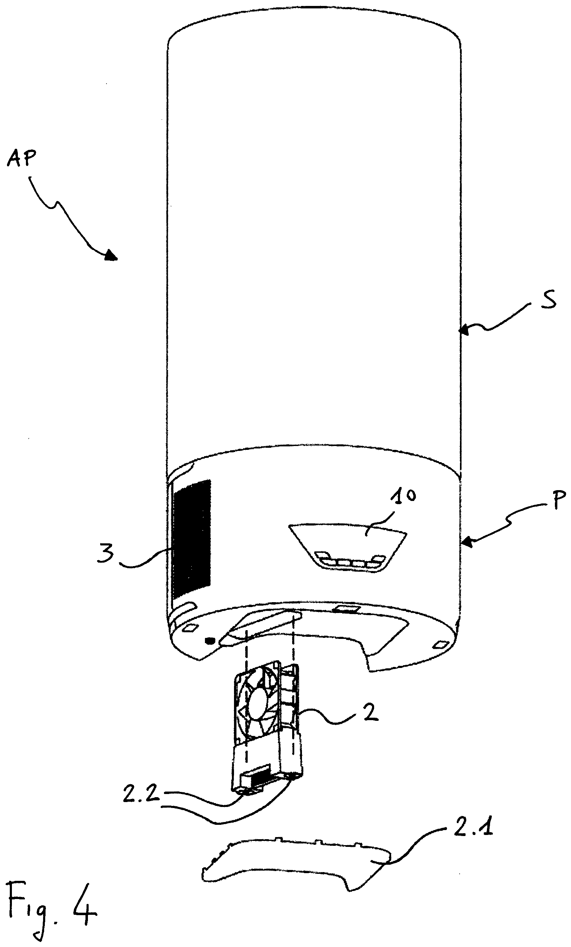

Fig. 4 shows a preferred variant of the invention, wherein it is envisaged that the fan 2 may be removed from the box-shaped body 1 of the pump assembly P, by pulling it out downwards like a cartridge; a further variant, not shown in the figure, may also be provided, wherein such fan 2 may be extracted sideways from said pump assembly P.

In the event that such component has to undergo maintenance or replacement, therefore, it is not necessary to disassemble the walls of the pump assembly P, but it is sufficient to remove a cover 2.1 for closing the fan 2, unscrew its fixing means 2.2 to the box-shaped body 1 and to interrupt the relative electrical contacts.

According to a further variant, the wall-hung appliance AP may also be equipped with an accessory for the collection of the condensation water produced during the thermodynamic cycle, which avoids the need of providing a special pipe for the canalization and discharge of such liquid.

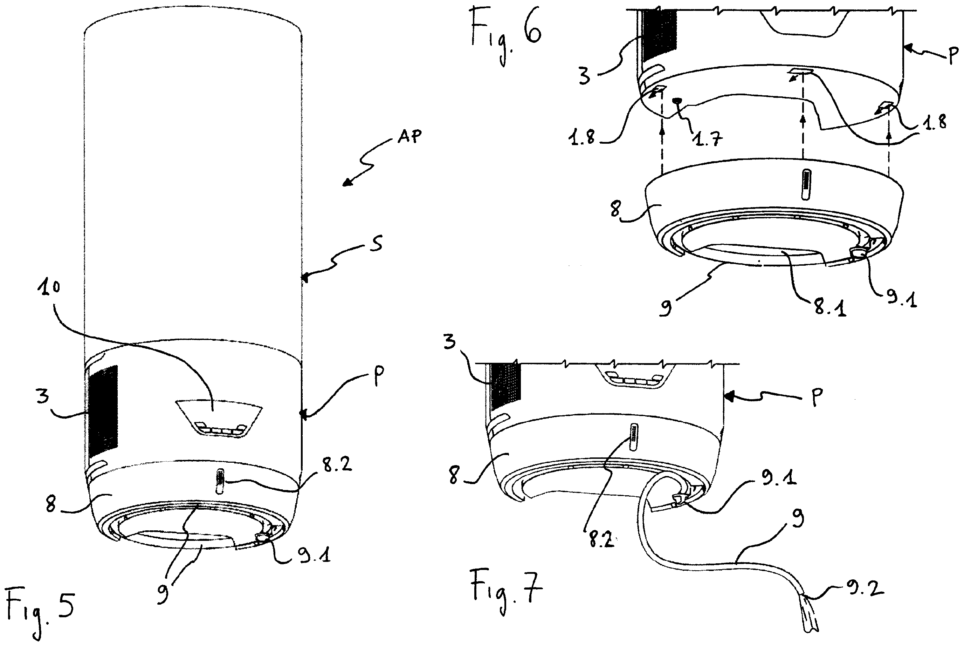

Figs. 5, 6 and 7 show such an accessory, consisting of a tank 8 intended to be placed below the pump assembly P and removably secured thereto through known fixing means.

Specifically, said tank 8 comprises a closed vessel having a shape substantially similar to that of the overlying pump assembly P, providing a rear free space 8.1 in order not to interfere with the hydraulic connections T of the wall-hung appliance AP.

The removable constraint with the pump assembly P takes place by coupling/release of suitable pins (not shown in figure), projecting from the upper surface of the tank 8 and intended to couple with reciprocal grooves 1.8 made on the lower surface of the box-shaped body 1 of said pump assembly P.

The condensation water flows by gravity directly from the pump assembly P inside the tank 8, flowing out from a draining hole 1.7 which is in direct communication with an inlet hole (not shown in figure) obtained on the upper surface of such tank 8.

Upon filling of the tank 8, this can be removed from the pump assembly P and emptied by letting the water drain by inclination through the said inlet hole.

Alternatively or additionally, the emptying of the tank 8 may take place according to a second method, without the need of removing it from the pump assembly P: the tank 8 may, in fact, be further provided with a flexible hose 9 from the outlet end 9.2 whereof the collected water flows, once a special drain valve 9.1 is opened (see Fig. 7).

Said flexible hose 9 is advantageously seated in a cavity obtained in the lower surface of the tank 8, retained therein by means of hooks, so as to remain substantially hidden when there is no need to pull it out for the emptying of the tank (see Figs. 5 and 6).

The tank 8 (preferably having sufficient capacity to contain the condensation water produced by the wall-hung appliance in about a week of standard use) may further comprise display means to advice the user of the completed filling: by way of an example, the presence of a specific transparent index 8.2 in the frontal area of the tank may be envisaged, through which the user acquires information on the filling level and on the need of proceeding with the emptying. Appropriate sensors (for example an electromechanical microswitch or a reed magnetic sensor, connected to a float inside the tank 8), also allows the output of visual (by the display 10 of the wall-hung appliance AP) and/or acoustic warnings to warn user and/or to directly modify the operating behaviour of the appliance according to the filling state of the tank 8, even in the absence of user's activity: upon reaching the maximum level of the condensation liquid, the sensor communicates the information to the control logic of the wall-hung appliance AP, inhibiting the operation of the thermodynamic group to stop the production of condensation water and enabling the operation of the electric resistor alone in order to guarantee the required hot water.

From the above description the advantages achievable with the wall-hung appliance AP according to the invention are clear, the first of which derives from the particular half-moon or C-shape and from the position of the pump assembly P, located below the tank S and, at least according to a preferred variant, entirely falling within the plan projection of the latter.

In this way a quick and simple installation is allowed in place of traditional storage water heaters TS, providing the possibility of exploiting both the same holes and/or hooking points F for the fixing of the bracket A to the wall and the pre-existing hydraulic connections T (that remain hidden to the sight, concealed behind the pump assembly P), without an increase in time and costs for the preparatory activities aimed at the setting up.

This configuration also facilitates the maintenance activities of the wall-hung appliance, eased both by the lowered position of the pump assembly P and by its half moon-shape with central 1.1 and rear 1.2 free spaces for easy access to the flange of the overlying tank S.

Related to the just mentioned advantage of an improved maintainability and functionality of use, there is also that of being able to provide that the fan 2 is removable like a cartridge from the respective seat inside the box-shaped body 1.1 of the pump assembly P and the one connected to the presence of the accessory for the collection of the condensation water, represented by the tank 8 which is removably connected to said pump assembly P.

It is clear that several variants of the wall-hung appliance AP described above are possible to the man skilled in the art, without departing from the novelty scopes of the inventive idea, as well as it is clear that in the practical embodiment of the invention the various components described above may be replaced with technically equivalent ones.

For example, the figures show a wall-hung appliance AP, and related pump assembly P and tank S, with a circular section; but obviously they may take different shapes, the innovative features related to the particular half-moon shape and to the spatial location of the pump assembly P remaining unchanged: therefore, in the case of different shapes, for example square or rectangular, the box-shaped body 1.1 of said pump assembly P will take a C-shape, always keeping free the spaces at the centre and at the rear for the attainment of the aforesaid objects.

A variant of the invention that is slightly different from the preferred one described herein and shown in the figures may also be provided, wherein, while maintaining unchanged the typical half-moon or C-shape, the pump assembly P has a box-shaped body 1 not entirely included within the plan projection of the overlying tank S, but also developing beyond the overall dimensions of the latter. Another advantage of the invention is that some of the components described in the present description may also be applied to appliances with different features from those of the present wall-hung appliance AP: for example, the removable cartridge fan may also be provided in products having the pump assembly placed in the traditional way, i.e. on top of the tank; as well as the particular half-moon or C-shape of the pump assembly may also be valid for the traditional type of appliances, keeping the advantage of easier access in the central and rear free spaces and of directing the cold air expelled towards the installation wall (but obviously losing all the other advantages closely related to the variant with the pump assembly positioned underneath).

## Claims

1. Wall-hung appliance (AP) consisting of a monobloc heat pump water heater intended to be installed on the wall, comprising in a single enclosure both a pump assembly (P) and a tank (S) containing the volume of water to be heated,
said pump assembly (P) being positioned below said tank (S) and comprising a box-shaped body (1) wherein means suitable for the thermodynamic function, such as a fan (2), an evaporator (5) and a compressor (6), are housed,
**characterised in that**
said box-shaped body (1) has a half-moon or C-shape, so as to outline central (1.1) and rear (1.2) free spaces.

2. Wall-hung appliance (AP) according to the previous claim,
**characterised in that**
said central free space (1.1) is adapted to allow access to a flange of an overlying tank (S) for the maintenance activities.

3. Wall-hung appliance (AP) according to any previous claim,
**characterised in that**
said rear free space (1.2) is adapted to allow the connection and placement of hydraulic connections (T), frontally hidden to the sight by said box-shaped body (1) of said pump assembly (P).

4. Wall-hung appliance (AP) according to any previous claim,
**characterised in that**
said central (1.1) and rear (1.2) free spaces are adapted to direct the cold air flow exiting from the box-shaped body (1) of said pump assembly (P), directing it towards an installation wall on which said wall-hung appliance (AP) is installed.

5. Wall-hung appliance (AP) according to the previous claim,
**characterised in that**
said box-shaped body (1) of said pump assembly (P) comprises a conveyor (1.3) adapted to direct said cold air flow towards said central (1.1) and rear (1.2) free spaces.

6. Wall-hung appliance (AP) according to any claim from 4 onwards,
**characterised in that**
said box-shaped body (1) of said pump assembly (P) comprises a baffle (1.4) adapted to direct said cold air flow towards said installation wall.

7. Wall-hung appliance (AP) according to any previous claim,
**characterised in that**
said box-like body (1) of said pump assembly (P) comprises removable panels (1.5).

8. Wall-hung appliance (AP) according to any previous claim,
**characterised in that**
a muffler (4) is interposed between a suction grid (3) and an evaporator (5) of said pump assembly (P), adapted to reduce the noise of the fan (2), said muffler (4) being composed of sound-absorbing and air-permeable material, or channels.

9. Wall-hung appliance (AP) according to any previous claim,
**characterised in that**
the fan (2) is removable from the box-shaped body (1) of said pump assembly (P) just as a cartridge, by removing a closing cover (2.1) and pulling it out from said box-shaped body (1) after the removal of its fixing means (2.2) and cut-off of its electrical contacts.

10. Wall-hung appliance (AP) according to any previous claim,
**characterised in that**
said pump assembly (P), positioned below said tank (S), is entirely comprised in the plan projection of said tank (S).

11. Wall-hung appliance (AP) according to any previous claim,
**characterised in that**
it further comprises a tank (8) for the collection of the condensation produced during the thermodynamic cycle, adapted to be removably placed at the bottom of said pump assembly (P), said tank (8) comprising an inlet hole in direct communication with a drain hole (1.7) of said pump assembly (P).

12. Wall-hung appliance (AP) according to the previous claim,
**characterised in that**
said tank (8) comprises a closed vessel with a shape substantially similar to that of said overlying pump assembly (P), outlining a rear free space (8.1) in order not to interfere with the connections (T) of said wall-hung appliance (AP).

13. Wall-hung appliance (AP) according to any claim from 11 onwards,
**characterised in that**
said tank (8) can be emptied by its removal from said pump assembly (P).

14. Wall-hung appliance (AP) according to any claim from 11 onwards,
**characterised in that**
said tank (8) further comprises a flexible hose (9) in connection with a drain valve (9.1), said flexible hose (9) being adapted to the emptying of said tank (8) without the need of removing it from said pump assembly (P).

15. Wall-hung appliance (AP) according to the previous claim,
**characterised in that**
said flexible hose (9) is seated in a cavity obtained in the lower surface of said tank (8), remaining substantially hidden when not pulled out for the emptying.

16. Wall-hung appliance (AP) according to any claim from 11 onwards,
**characterised in that**
said tank (8) comprises display means (8.2) to advise the user regarding the filling level.

17. Wall-hung appliance (AP) according to any claim from 11 onwards,
**characterised in that**
said tank (8) comprises sensors associated with display means and/or acoustic means for the output of warnings adapted to warn the user and/or to directly modify the functionality of said wall-hung appliance (AP) in function of the maximum filling level of said tank (8).

18. Wall-hung appliance (AP) according to any previous claim,
**characterised in that**
holes and/or hooking points (F) for the fixing thereof to the wall through bracket (A) and the hydraulic connections (T) for the connection to the pipes are the same as for a standard storage water heater (TS) to be replaced.

## Patentansprüche

1. Wandgerät (AP), bestehend aus einem Monoblock-Wärmepumpen-Warmwasserbereiter, der dazu vorgesehen ist, an der Wand installiert zu werden, der in einem einzigen Gehäuse sowohl eine Pumpenanordnung (P) als auch einen Tank (S) aufweist, der das zu erwärmende Wasservolumen enthält,
wobei die Pumpenanordnung (P) unter dem Tank (S) positioniert ist und einen kastenförmigen Körper (1) aufweist, worin Mittel, die für die thermodynamische Funktion geeignet sind, wie ein Lüfter (2), ein Verdampfer (5) und ein Kompressor (6), untergebracht sind,
**dadurch gekennzeichnet, dass**
der kastenförmige Körper (1) eine halbmondförmige oder C-förmige Form derart aufweist, um den mittleren (1.1) und den hinteren (1.2) freien Raum zu umreißen.

2. Wandgerät (AP) nach dem vorhergehenden Anspruch,
**dadurch gekennzeichnet, dass**
der mittlere freie Raum (1.1) geeignet ist, den Zugang zu einem Flansch eines darüber liegenden Tanks (S) für die Wartungsarbeiten zu ermöglichen.

3. Wandgerät (AP) nach einem der vorhergehenden Ansprüche, **dadurch gekennzeichnet, dass**
der hintere freie Raum (1.2) geeignet ist, das Anschließen und Anordnen von Hydraulikanschlüssen (T) zu ermöglichen, die durch den kastenförmigen Körper (1) der Pumpenanordnung (P) frontal dem Auge verborgen sind.

4. Wandgerät (AP) nach einem der vorhergehenden Ansprüche, **dadurch gekennzeichnet, dass**
der mittlere (1.1) und der hintere (1.2) freie Raum geeignet sind, den Kaltluftstrom, der aus dem kastenförmigen Körper (1) der Pumpenbaugruppe (P) austritt, zu einer Installationswand zu leiten, an der das Wandgerät (AP) installiert ist.

5. Wandgerät (AP) nach dem vorhergehenden Anspruch,
**dadurch gekennzeichnet, dass**
der kastenförmige Körper (1) der Pumpenanordnung (P) einen Förderer (1.3) aufweist, der geeignet ist, den Kaltluftstrom zu dem mittleren (1.1) und dem hinteren (1.2) freien Raum zu leiten.

6. Wandgerät (AP) nach einem der Ansprüche ab Anspruch 4, **dadurch gekennzeichnet, dass**
der kastenförmige Körper (1) der Pumpenanordnung (P) eine Prallfläche (1.4) aufweist, die geeignet ist, den Kaltluftstrom zu der Installationswand zu leiten.

7. Wandgerät (AP) nach einem der vorhergehenden Ansprüche, **dadurch gekennzeichnet, dass**
der kastenförmige Körper (1) der Pumpenbaugruppe (P) abnehmbare Paneele (1.5) aufweist.

8. Wandgerät (AP) nach einem der vorhergehenden Ansprüche, **dadurch gekennzeichnet, dass**
ein Schalldämpfer (4) zwischen einem Ansauggitter (3) und einem Verdampfer (5) der Pumpenanordnung (P) angeordnet ist, um das Geräusch des Lüfters (2) zu verringern, wobei der Schalldämpfer (4) aus schallabsorbierendem und luftdurchlässigen Material oder Kanälen besteht.

9. Wandgerät (AP) nach einem der vorhergehenden Ansprüche, **dadurch gekennzeichnet, dass**
der Lüfter (2) eben so wie eine Patrone von dem kastenförmigen Körper (1) der Pumpenanordnung (P) abnehmbar ist, indem ein Verschlussdeckel (2.1) entfernt wird und er nach dem Entfernen seiner Befestigungsmittel (2.2) und dem Unterbrechen seiner elektrischen Kontakte aus dem kastenförmigen Körper (1) herausgezogen wird.

10. Wandgerät (AP) nach einem der vorhergehenden Ansprüche,
**dadurch gekennzeichnet, dass**
die Pumpenanordnung (P), die unter dem Tank (S) positioniert ist, vollständig in der Grundrissprojektion des Tanks (S) enthalten ist.

11. Wandgerät (AP) nach einem der vorhergehenden Ansprüche,
**dadurch gekennzeichnet, dass**
es ferner einen Tank (8) zum Sammeln des Kondenswassers aufweist, das während des thermodynamische Kreisprozesses erzeugt wird, der geeignet ist, um abnehmbar am Boden der Pumpenanordnung (P) angeordnet zu werden, wobei der Tank (8) ein Einlassloch in direkter Verbindung mit einem Abflussloch (1.7) der Pumpenbaugruppe (P) aufweist.

12. Wandgerät (AP) nach dem vorhergehenden Anspruch,
**dadurch gekennzeichnet, dass**
der Tank (8) einen geschlossenen Behälter mit einer Form aufweist, die im Wesentlichen jener der darüber liegenden Pumpenanordnung (P) ähnlich ist, und einen hinteren freien Raum (8.1) umreißt, um die Anschlüsse (T) des Wandgeräts (AP) nicht zu beeinträchtigen.

13. Wandgerät (AP) nach einem der Ansprüche ab Anspruch 11,
**dadurch gekennzeichnet, dass**
der Tank (8) durch sein Entfernen von der Pumpenanordnung (P) entleert werden kann.

14. Wandgerät (AP) nach einem der Ansprüche ab Anspruch 11, **dadurch gekennzeichnet, dass**
der Tank (8) ferner einen flexiblen Schlauch (9) in Verbindung mit einem Ablassventil (9.1) aufweist, wobei der flexible Schlauch (9) zum Entleeren des Tanks (8) geeignet ist, ohne dass er von der Pumpenanordnung (P) entfernt werden muss.

15. Wandgerät (AP) nach dem vorhergehenden Anspruch,
**dadurch gekennzeichnet, dass**
der flexible Schlauch (9) in einem Hohlraum sitzt, der in der Unterseite des Tanks (8) erhalten ist, und im Wesentlichen verborgen bleibt, wenn er nicht zum Entleeren herausgezogen wird.

16. Wandgerät (AP) nach einem der Ansprüche ab Anspruch 11,
**dadurch gekennzeichnet, dass**
der Tank (8) Anzeigemittel (8.2) aufweist, um den Benutzer bezüglich des Füllstands zu informieren.

17. Wandgerät (AP) nach einem der Ansprüche ab Anspruch 11,
**dadurch gekennzeichnet, dass**
der Tank (8) Sensoren aufweist, die mit Anzeigemitteln und/oder akustischen Mitteln zur Ausgabe von Warnungen verbunden sind, die geeignet sind, den Benutzer zu warnen und/oder die Funktionalität des Wandgeräts (AP) in Abhängigkeit vom maximalen Füllstand des Tanks (8) direkt zu ändern.

18. Wandgerät (AP) nach einem der vorhergehenden Ansprüche, **dadurch gekennzeichnet, dass**
die Löcher und/oder Einhakstellen (F) für die Befestigung davon an der Wand durch Bügel (A) und die Hydraulikanschlüsse (T) für den Anschluss an die Rohrleitungen die gleichen wie für einen zu ersetzenden Standard-Warmwasserbereiter (TS) sind.

## Revendications

1. Appareil suspendu à un mur (AP) constitué d'un chauffe-eau monobloc à pompe à chaleur destiné à être installé au mur, comprenant dans une seule enceinte à la fois un ensemble de pompe (P) et un réservoir (S) contenant le volume d'eau à chauffer,
ledit ensemble de pompe (P) étant positionné sous ledit réservoir (S) et comprenant un corps en forme de boîte (1) dans lequel sont logés des moyens adaptés à la fonction thermodynamique, tels qu'un ventilateur (2), un évaporateur (5) et un compresseur (6),
**caractérisé en ce que**
ledit corps en forme de boîte (1) a une forme de demi-lune ou de C, de manière à délimiter des espaces libres au centre (1.1) et à l'arrière (1.2).

2. Appareil suspendu à un mur (AP) selon la revendication précédente,
**caractérisé en ce que**
ledit espace libre central (1.1) est adapté pour permettre l'accès à une bride d'un réservoir superposé (S) pour les activités de maintenance.

3. Appareil suspendu à un mur (AP) selon l'une quelconque des revendications précédentes,
**caractérisé en ce que**
ledit espace libre arrière (1.2) est adapté pour permettre le raccordement et le placement de raccords hydrauliques (T), cachés à l'avant à la vue par ledit corps en forme de boîte (1) dudit ensemble de pompe (P).

4. Appareil suspendu à un mur (AP) selon l'une quelconque des revendications précédentes,
**caractérisé en ce que**
lesdits espaces libres central (1.1) et arrière (1.2) sont adaptés pour diriger le flux d'air froid sortant du corps en forme de boîte (1) dudit ensemble de pompe (P), en le dirigeant vers un mur d'installation sur lequel ledit appareil suspendu à un mur (AP) est installé.

5. Appareil suspendu à un mur (AP) selon la revendication précédente, **caractérisé en ce que**
ledit corps en forme de boîte (1) dudit ensemble de pompe (P) comprend un convoyeur (1.3) adapté pour diriger ledit flux d'air froid vers lesdits espaces libres central (1.1) et arrière (1.2).

6. Appareil suspendu à un mur (AP) selon l'une quelconque des revendications à partir de 4,
**caractérisé en ce que**
ledit corps en forme de boîte (1) dudit ensemble de pompe (P) comprend un déflecteur (1.4) adapté pour diriger ledit flux d'air froid vers ledit mur d'installation.

7. Appareil suspendu à un mur (AP) selon l'une quelconque des revendications précédentes,
**caractérisé en ce que**
ledit corps en forme de boîte (1) dudit ensemble de pompe (P) comprend des panneaux amovibles (1.5).

8. Appareil suspendu à un mur (AP) selon l'une quelconque des revendications précédentes,
**caractérisé en ce que**
un silencieux (4) est interposé entre une grille d'aspiration (3) et un évaporateur (5) dudit ensemble de pompe (P), adapté pour réduire le bruit du ventilateur (2), ledit silencieux (4) étant composé d'un matériau insonorisant et perméable à l'air, ou de canaux.

9. Appareil suspendu à un mur (AP) selon l'une quelconque des revendications précédentes,
**caractérisé en ce que**
le ventilateur (2) peut être retiré du corps en forme de boîte (1) dudit ensemble de pompe (P) comme une cartouche, en retirant un couvercle de fermeture (2.1) et en le tirant hors dudit corps en forme de boîte (1) après avoir retiré ses moyens de fixation (2.2) et coupé ses contacts électriques.

10. Appareil suspendu à un mur (AP) selon l'une quelconque des revendications précédentes,
**caractérisé en ce que**
ledit ensemble de pompe (P), placé sous ledit réservoir (S), est entièrement compris dans la projection en plan dudit réservoir (S).

11. Appareil suspendu à un mur (AP) selon l'une quelconque des revendications précédentes,
**caractérisé en ce que**
il comprend en outre un réservoir (8) pour la collecte de la condensation produite pendant le cycle thermodynamique, adapté pour être placé de manière amovible au fond dudit ensemble de pompe (P), ledit réservoir (8) comprenant un trou d'entrée en communication directe avec un trou de drainage (1.7) dudit ensemble de pompe (P).

12. Appareil suspendu à un mur (AP) selon la revendication précédente,
**caractérisé en ce que**
ledit réservoir (8) comprend un récipient fermé ayant une forme sensiblement similaire à celle dudit ensemble de pompe superposé (P), délimitant un espace libre arrière (8.1) afin de ne pas interférer avec les connexions (T) dudit appareil suspendu à un mur (AP).

13. Appareil suspendu à un mur (AP) selon toute revendication à partir de 11,
**caractérisé en ce que**
ledit réservoir (8) peut être vidé par son retrait dudit ensemble de pompe (P).

14. Appareil suspendu à un mur (AP) selon l'une quelconque des revendications à partir de 11,
**caractérisé en ce que**
ledit réservoir (8) comprend en outre un tuyau flexible (9) en liaison avec une vanne de vidange (9.1), ledit tuyau flexible (9) étant adapté à la vidange dudit réservoir (8) sans qu'il soit nécessaire de le retirer dudit ensemble de pompe (P).

15. Appareil suspendu à un mur (AP) selon la revendication précédente,
**caractérisé en ce que**
ledit tuyau flexible (9) est logé dans une cavité obtenue dans la surface inférieure dudit réservoir (8), restant sensiblement caché lorsqu'il n'est pas sorti pour la vidange.

16. Appareil suspendu à un mur (AP) selon toute revendication à partir de 11,
**caractérisé en ce que**
ledit réservoir (8) comprend des moyens d'affichage (8.2) pour informer l'utilisateur du niveau de remplissage.

17. Appareil suspendu à un mur (AP) selon toute revendication à partir de 11,
**caractérisé en ce que**
ledit réservoir (8) comprend des capteurs associés à des moyens d'affichage et/ou des moyens acoustiques pour la sortie d'avertissements adaptés pour avertir l'utilisateur et/ou pour modifier directement la fonctionnalité dudit appareil suspendu à un mur (AP) en fonction du niveau de remplissage maximal dudit réservoir (8).

18. Appareil suspendu à un mur (AP) selon l'une quelconque des revendications précédentes,
**caractérisé en ce que**
les trous et/ou points d'accrochage (F) pour la fixation au mur à travers le support (A) et les raccords hydrauliques (T) pour le raccordement aux tuyaux sont les mêmes que pour un chauffe-eau à accumulation standard (TS) à remplacer.
